(19) **Europäisches Patentamt / European Patent Office / Office européen des brevets**

(11) **EP 3 623 956 A1**

(12) **EUROPEAN PATENT APPLICATION**
published in accordance with Art. 153(4) EPC

(43) Date of publication:
**18.03.2020 Bulletin 2020/12**

(21) Application number: **17918888.3**

(22) Date of filing: **29.12.2017**

(51) Int Cl.:
**G06F 16/00** (2019.01)

(86) International application number:
**PCT/CN2017/120045**

(87) International publication number:
**WO 2019/019554 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **26.07.2017 CN 201710618792**

(71) Applicant: **Beijing Sankuai Online Technology Co., Ltd**
**Beijing 100080 (CN)**

(72) Inventors:
• **TANG, Biao**
  **Beijing 100080 (CN)**
• **ZHANG, Gong**
  **Beijing 100080 (CN)**
• **SU, Jing**
  **Beijing 100080 (CN)**
• **GUO, Haojie**
  **Beijing 100080 (CN)**
• **QIN, Yuqing**
  **Beijing 100080 (CN)**
• **HOU, Peixu**
  **Beijing 100080 (CN)**

(74) Representative: **Manitz Finsterwald**
**Patent- und Rechtsanwaltspartnerschaft mbB**
**Martin-Greif-Strasse 1**
**80336 München (DE)**

(54) **METHOD AND APPARATUS FOR OBTAINING RECOMMENDATION INFORMATION, AND ELECTRONIC DEVICE**

(57) This application provides a recommendation information obtaining method. The method includes: obtaining to-be-displayed suggest information; constructing a label pool based on the suggest information and a preset label knowledge map; and selecting a preset number of labels from the label pool and recommending the preset number of labels to a user. The label knowledge map is one in which multi-dimensional information of a core word is described based on the core word using a label.

```
┌─────────────────────────────────────────┐
│ Obtain to-be-displayed suggest           │  100
│ information                               │
└─────────────────────────────────────────┘
                    │
                    ▼
┌─────────────────────────────────────────┐
│ Construct a label pool based on the       │  110
│ suggest information and a preset label    │
│ knowledge map                             │
└─────────────────────────────────────────┘
                    │
                    ▼
┌─────────────────────────────────────────┐
│ Select a preset number of labels from     │  120
│ the label pool and recommend the preset   │
│ number of labels to a user                │
└─────────────────────────────────────────┘
```

FIG. 1

EP 3 623 956 A1

## Description

## CROSS REFERENCE TO RELATED APPLICATIONS

This application claims priority to Chinese Patent No. 201710618792.2, filed on July 26, 2017 and entitled "RECOMMENDATION INFORMATION OBTAINING METHOD AND APPARATUS, AND ELECTRONIC DEVICE", which is incorporated herein by reference in its entirety.

## TECHNICAL FIELD

This application relates to the field of computer technologies, and in particular, to a recommendation information obtaining method and apparatus, and an electronic device.

## BACKGROUND

A drop-down suggest is intended to associate a text input by a user (in a search box), to recommend and display a relevant matched suggest word for the user to select, thereby reducing costs of user input, and is further intended to control quality of an association result to assist a search engine in understanding and retrieval, thereby enhancing search experience of a user. A drop-down suggest generally means to perform prefix matching based on a text input by a user, for example, calculate a recommendation probability of each piece of recommendation information according to a weight of an input prefix and a weight of each drop-down suggest result under each weight. For example, when "fire" is input for searching, recommendation information such as "hot pot" is provided in the suggest as suggest information for the user to select. Further, in order to supplement recommendation information provided to a user, category information related to each piece of suggest information may be recommended for the user to select. For example, when a user inputs a search keyword "shirt", suggest information includes "shirt dress". In addition, a system selects a category label of the suggest information "shirt dress" according to a preset label lexicon, and then recommends category information of the suggest information, such as: long, slim, Korean, etc. The recommendation information is relatively monotonous.

## SUMMARY

This application provides recommendation information obtaining method to enrich to-be-obtained recommendation information as much as possible.
In order to resolve the problem, according to a first aspect, an embodiment of this application provides a recommendation information obtaining method, including:

    obtaining to-be-displayed suggest information;

    constructing a label pool based on the suggest information and a preset label knowledge map in which multi-dimensional information of a core word is described based on the core word using a label; and selecting a preset number of labels from the label pool and recommending the preset number of labels to a user.

According to a second aspect, an embodiment of this application provides a recommendation information obtaining apparatus, including:

    a suggest information obtaining module configured to obtain to-be-displayed suggest information;
    a label pool constructing module configured to construct a label pool based on the suggest information and a preset label knowledge map in which multi-dimensional information of a core word is described based on the core word using a label; and
    a recommendation module configured to select a preset number of labels from the label pool and recommend the preset number of labels to a user.

According to a third aspect, an embodiment of this application further discloses an electronic device, including a memory, a processor, and a computer program stored on the memory and executable on the processor, where when the processor executes the computer program, the recommendation information obtaining method according to the embodiment of this application is implemented.
According to a fourth aspect, an embodiment of this application provides a computer readable storage medium storing a computer program, where when executed by a processor, the computer program implements the steps of the recommendation information obtaining method according to the embodiment of this application.
According to the recommendation information obtaining method disclosed in the embodiment of this application, the to-be-displayed suggest information is obtained, and the label pool is constructed based on the suggest information and the preset label knowledge map, and then the preset number of labels are selected from the label pool and recommended to the user, so that information to be recommended to the user is enriched. Moreover, the label in the obtained label pool is selected according to a preset method, so that a label to be recommended to the user changes in real time, and the to-be-recommended information is more novel.

## BRIEF DESCRIPTION OF THE DRAWINGS

To describe the technical solutions in the embodiments of this application more clearly, the following briefly introduces the accompanying drawings required for describing the embodiments or the prior art. Apparently, the accompanying drawings in the following description show merely some embodiments of this application, and a person of ordinary skill in the art may still derive other drawings from these accompanying drawings without creative efforts.

FIG. 1 is a flowchart of a recommendation information obtaining method according to an embodiment of this application.

FIG. 2 is a flowchart of a recommendation information obtaining method according to another embodiment of this application.

FIG. 3 is a schematic structural diagram of a recommendation information obtaining apparatus according to an embodiment of this application.

FIG. 4 is a schematic structural diagram of a recommendation information obtaining apparatus according to another embodiment of this application.

FIG. 5 is a schematic structural diagram of a recommendation information obtaining apparatus according to still another embodiment of this application.

## DETAILED DESCRIPTION OF THE EMBODIMENTS

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

A recommendation information obtaining method in the embodiments of this application may be applied to the field of search recommendation. For example, after a user inputs a search word on an application page, a search engine performs searching based on a prefix to retrieve a plurality of search results, and displays the search results as suggest information. For each piece of suggest information, a recommendation system obtains corresponding recommendation information by calling the recommendation information obtaining method disclosed in this application, and displays the recommendation information at an appropriate location.

Embodiment 1

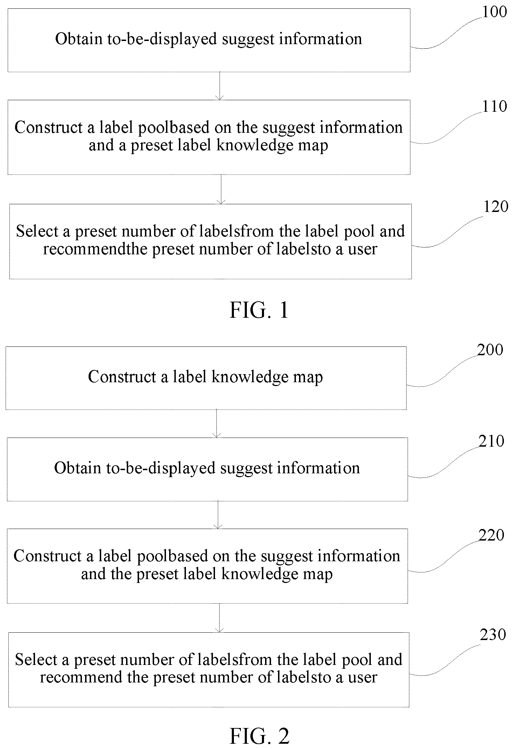

As shown in FIG. 1, a recommendation information obtaining method disclosed in this embodiment includes step 100 to step 120.

Step 100: To-be-displayed suggest information is obtained.

On a recommendation application, after a user inputs a search keyword, a search engine returns a corresponding search result based on prefix matching and displays the search result to the user. Then the recommendation application selects a preset number of search results with a best indicator as the suggest information according to an indicator such as a matching degree or a hit rate, etc. of the search result, so that the recommendation application displays the suggest information on a search page to the user. In specific implementation, after it is detected that the user inputs the search keyword, the suggest information to be displayed to the user may be obtained through calling of an interface provided by the search engine.

Step 110: A label pool is constructed based on the suggest information and a preset label knowledge map.

The label knowledge map is one in which the suggest information is a core word and corresponding dimensional information of the suggest information is described using a label.

Before information is recommended based on the suggest information, a label knowledge map needs to be established first.

During establishment of a label knowledge map, possible suggest information needs to be determined first. The suggest information is usually obtained based on a search log of a user and a hit log of a search result. For example, many users hit a search result "auto beauty" after inputting "automobile". Therefore, "auto beauty" is used as suggest information during establishment of a label knowledge map.

The label knowledge map is one in which suggest information is a core word and corresponding dimensional information of the suggest information is described using a label. The label knowledge map includes a plurality of core words. A multi-dimensional knowledge system is constructed for each core word, and a cluster knowledge map is finally formed. A label is used to describe information of the core word in each dimension. For example, for the core word "auto beauty", information thereof in a category dimension may be described as "internal beauty", "lacquer care", and information thereof in a brand dimension may be described as "Auto Studio" and "Auto Yibai". Therefore, a label of the suggest information "automotive beauty" includes: "internal beauty", "lacquer care", "Auto Studio", and "Auto Yibai". Then a knowledge map is constructed for each piece of the suggest information according to an affiliation relationship between the suggest information and a hierarchy and a category of each label represented using a data structure. In specific implementation, a label dimension includes: a category, a subcategory, an additional attribute, etc. The additional attribute may be merchant information, brand information, geographic information, product feature information, etc. A core word and a label of the core word are generally determined through analysis of platform data in combination of a specific service requirement.

In specific implementation, the label knowledge map may be represented using a tree-like structure. A root node of the tree-like structure is a core word of each cluster knowledge map, and a leaf node of the tree-like structure is a label of the core word in each dimension.

The suggest information is matched with each core word in the preset label knowledge map, and then all labels in the label knowledge map corresponding to matched core words are used as labels of the suggest information, and are added to the label pool.

Step 120: A preset number of labels are selected from the label pool and recommended to a user.

Due to limited display space, a preset number of labels are usually selected from the label pool and recommended to the user. For example, for each piece of suggest information, three recommendation labels are displayed. During selection of a label to be displayed to a user, a preset number of labels may be randomly selected to be displayed to the user, or a label with a high hit rate may be selected to be displayed to the user, or a preset number of labels with a highest recommendation value are selected from the label pool using an upper confidence bound algorithm and recommended to the user. A recommendation value of a label may be calculated according to historical hit data of the label or using a combination of the historical hit data of the label and a user feature of a user who accepts recommendation.

According to the recommendation information obtaining method disclosed in this embodiment of this application, the to-be-displayed suggest information is obtained, and the label pool is constructed based on the suggest information and the preset label knowledge map, and then the preset number of labels are selected from the label pool and recommended to the user, so that a prior-art problem that obtained recommendation information is monotonous and remains unchanged as a result of a fixed preset label lexicon. A label pool is constructed based on the preset label knowledge map, so that information to be recommended to a user is enriched. A label in the obtained label pool is selected according to a preset method, so that a label to be recommended to a user changes in real time, and the to-be-recommended information is more novel.

Embodiment 2

As shown in FIG. 2, a recommendation information obtaining method disclosed in this embodiment includes step 200 to step 230.

Step 200: A label knowledge map is constructed.

Before information is recommended based on suggest information, a label knowledge map needs to be established first.

During establishment of a label knowledge map, possible suggest information needs to be determined first. The suggest information is usually obtained based on a search log of a user and a hit log of a search result. For example, many users hit a search result "auto beauty" after inputting "automobile". Therefore, "auto beauty" is used as suggest information during establishment of a label knowledge map.

The label knowledge map is one in which suggest information is a core word and corresponding dimensional information of the suggest information is described using a label. A label is a word that is related to a core word, such a word used to describe each dimension attribute of the core word. The label knowledge map includes a plurality of core words. A multi-dimensional knowledge system is constructed for each core word based on a label of the core word and a hierarchical association relationship between the core word and the label, and a cluster knowledge map is finally formed. A label is used to describe information of the core word in each dimension. For example, for the core word "auto beauty", information thereof in a category dimension may be described as "internal beauty", "lacquer care", and information thereof in a brand dimension may be described as "Auto Studio" and "Auto Yibai". Therefore, a label of the suggest information "automotive beauty" includes: "internal beauty", "lacquer care", "Auto Studio", and "Auto Yibai". Then a knowledge map is constructed for each piece of the suggest information according to an affiliation relationship between the suggest information and a hierarchy and a category of each label represented using a data structure. In specific implementation, a label dimension includes: a category, a subcategory, an additional attribute, etc. The additional attribute may be merchant information, brand information, geographic information, product feature information, etc. A core word and a label of the core word are generally determined through analysis of platform data in combination of a specific service requirement.

Constructing a label knowledge map includes: constructing a label knowledge map based on structured point of interest data, and/or constructing a label knowledge map based on a user behavior log. In specific implementation, the label knowledge map may be constructed according to only the structured interest point data, or the label knowledge map may be constructed according to only the user behavior log, or the label knowledge map may be constructed according to both the structured point of interest data and the user behavior log.

The constructing a label knowledge map based on structured point of interest data specifically includes: determining a core word and a label of the core word based on a point of interest name, a category name, and an additional attribute name in the structured point of interest data; establishing a tree-like relationship among labels according to a hierarchical relationship among category systems in the structured point of interest data, a hierarchical relationship among additional attribute systems, and a correspondence between the category system and the additional attribute system. A root node of each of the tree-like relationships is a core word of the cluster label knowledge map, and a leaf node is a label of a corresponding hierarchy.

Structured point of interest data, which is referred to as POI data below, is usually data used for a search platform or a recommendation platform to describe commodity information. The POI data usually includes a category system and an additional attribute system.

In the category system, according to a service requirement, different category labels are set for commodities, and a hierarchical relationship among categories is set. The category label includes a parent category name and a subcategory name. The hierarchical category relationship includes a current category, a parent category of the current category, and subcategories included in the current category. A service "Beauties" is used as an example. A parent category of a category system thereof includes: manicure, hairdressing, yoga, dance, tattoo, etc. The hairdressing category is further divided into subcategories such as hair dyeing, haircutting, hair styling, etc., and so on, constituting a hierarchical category relationship. A category system based on POI data may be used to obtain a label knowledge map of a specific number of commodities.

In the additional attribute system, according to a service requirement, different additional attribute labels are set for commodities, and a hierarchical relationship among additional attributes is set. A "manicure" product is used as an example. "Manicure" is a point of interest name, and an additional attribute thereof may include additional attribute labels such as painted and matte, etc. A next hierarchy under the "painted" label includes attributes such as rich, fresh, and pastoral, etc. Information in the category system and information in the additional attribute system are complementary, so that more comprehensive data may be obtained for constructing the label knowledge map.

Each piece of POI data includes a plurality of fields respectively representing a POI name, a current parent category, a current subcategory, and attribute information, etc. In specific implementation, the POI data is parsed, so that a category name corresponding to the POI name, a hierarchical relationship among category names, an additional attribute name, and a hierarchical relationship among attribute names may be obtained. There is an association relationship between the category system and the additional attribute system. For example, a category hierarchy of "manicure" is a parent category, and a category hierarchy of "painted" is a subcategory. A label knowledge map may be constructed based on the foregoing information extracted from the POI data.

In specific implementation, the core word "manicure" is used as an example. A label under the code word includes "painted" and "matte". Accordingly, a label knowledge map of "manicure" may be constructed. If the label knowledge map is represented using a tree-like structure, a root node thereof is "manicure", and a leaf node includes "painted" and "matte". In specific implementation, additional attribute labels such as rich, fresh, and pastoral, etc. may be further used as leaf nodes of "painted", to complete the label knowledge map.

The constructing the label knowledge map based on a user behavior log specifically includes: determining a core word and a label of the core word based on a mined frequent item set of the user behavior log; and establishing a tree-like relationship among corresponding labels according to a preset association relationship between frequent items. A root node of the tree-like relationship is a core word of the cluster label knowledge map, and a leaf node is a label. The preset association relationship includes an association relationship between a commodity and a merchant and an association relationship between a merchant and a business circle.

An application on a search platform or a recommendation platform has a large number of user behavior logs. Massive historical user behavior data is analyzed, so that a core word and a label related to the core word may be obtained. In specific implementation, a frequent item set in log data of the user behavior log is mined using a mining algorithm, and a core word and a label of the core word are selected from the frequent item set. In specific implementation, a search word may be used as a core word, and according to a specific service requirement, a label of the core word is selected from the frequent item set and a hierarchical relationship between the core word and the label is established. For example, lots of users inputting crayfish for searching hits "Shanghai Xiaopang" (a restaurant famous for crayfish), and therefore, "Shanghai Xiaopang" becomes a label of crayfish. If "crayfish" is used as the root node of the tree-like relationship, "Shanghai Xiaopang" is used as the leaf node of the tree-like relationship, which is a portion of a label knowledge map of the core word "crayfish".

In specific implementation, a frequent item set may be further mined from the user behavior log. After a merchant hit by most users when searching for a specific word is mined, a location of the merchants that is hit is further calculated, and then a hierarchical relationship between the merchant and the business circle is established using the merchant as a core word and a business circle in which the merchant is located as a label of the merchant, thereby constructing a label knowledge map. In other words, the merchant is used as a root node of the tree-like relationship, and the business circle is used as a leaf node of the tree-like relationship.

In specific implementation, through frequent item set mining, a core word and a label may be selected according to a service requirement, and a label knowledge map of the label and the core word is further established. The preset association relationship may also be set to other relationships according to a specific service requirement, which are not enumerated herein.

Through frequent item set mining based on the user behavior log, a merchant with high quality and a high hit rate and a high-quality business circle are recommended to a user, thereby enhancing user experience.

Step 210: To-be-displayed suggest information is obtained.

On a recommendation application, after a user inputs a search keyword, a search engine returns a corresponding search result based on prefix matching and displays the search result to the user. Then the recommendation application selects a preset number of search results with a best indicator as the suggest information according to an indicator such as a matching degree or a hit rate, etc. of the search result, so that the recommendation application displays the suggest information on a search page to the user. In specific implementation, after it is detected that the user inputs the search keyword, the suggest information to be displayed to the user may be obtained through calling of an interface provided by the search engine. In specific implementation, the suggest information may be displayed to the user in a form of a drop-down suggest word or in other forms.

Step 220: A label pool is constructed based on the suggest information and the preset label knowledge map.

The label knowledge map is one in which the suggest information is a core word and corresponding dimensional information of the suggest information is described using a label.

In specific implementation, the constructing a label pool based on the suggest information and a preset label knowledge map includes: matching the suggest information with each core word in the label knowledge map; and adding all labels in the label knowledge map corresponding to matched core words to the label pool.

In specific implementation, that the label knowledge map is represented using a tree-like structure is used as an example. A root node of the tree-like structure is a core word of each cluster knowledge map, and a leaf node of the tree-like structure is a label of the core word in each dimension. The suggest information is matched with a core word at each root node in the preset label knowledge map, and then labels corresponding to all leaf nodes under a matched root node are used as labels of the suggest information, and are added to the label pool.

A number of labels corresponding to each piece of suggest information is related to a hierarchy in which the suggest information is located in a knowledge map. A higher hierarchy means more corresponding labels. In specific implementation, for each piece of suggest information, a number of recommendation words, that is, labels displayed to a user is limited due to limited display space. For example, at most three related labels related to each drop-down word are allowed to be displayed, and at most nine labels are allowed to be displayed on an entire screen, to avoid flooding labels on the screen. Therefore, in descending order of hierarchy in a knowledge map hierarchy, labels of a highest hierarchy in a knowledge map in which a code word matching the suggest information is located are extracted to construct a label pool.

Step 230: A preset number of labels are selected from the label pool and recommended to a user.

Due to limited display space, a preset number of labels are usually selected from the label pool and recommended to the user. For example, for each piece of suggest information, three recommendation labels are displayed. During selection of a label to be displayed to a user, a preset number of labels may be randomly selected to be displayed to the user. However, excessive unpopular labels are exposed as a result of random selection, wasting valuable display opportunities. Alternatively, a label with a high hit rate may be displayed to the user. In this method, a same label is displayed to all users, and a large number of labels cannot be displayed, deteriorating user experience.

Preferably, in specific implementation, the selecting a preset number of labels from the label pool and recommending the preset number of labels to a user includes: selecting the preset number of labels from the label pool using an upper confidence bound algorithm.

The selecting the preset number of labels from the label pool using an upper confidence bound algorithm includes: estimating an expected revenue of each label in the label pool according to data about a historical behavior performed by the user on the label in the label pool; respectively determining a revenue adjustment indicator of each label in the label pool according to a historical total number of times a label of the suggest information is displayed and a total number of times each label in the label pool is displayed; using a sum of the expected revenue and the revenue adjustment indicator as a recommendation value of each label in the label pool; and selecting, from the label pool, the preset number of labels with a highest recommendation value and recommending the preset number of labels to the user.

In specific implementation, an expected revenue of a label may be expressed as:

$$revenue = X_j(t) \quad \text{Formula 1}$$

t is an expected revenue of a label j of suggest information X.

The estimating an expected revenue of each label in the label pool according to data about a historical behavior performed by the user on the label in the label pool is implemented using two methods.

In a first method, an expected revenue of a corresponding label in the label pool is estimated based on a historical hit rate of suggest information same as the label.

A search page of a recommendation application is used as an example. During display of recommendation information searched based on a search keyword, a suggest information display location and a label display location are usually disposed. The suggest information display location is used to display suggest information searched based on a search keyword, for example, a drop-down suggest word. The label display location is used to display a label of the suggest information, for example, a category of a drop-down suggest word. When a label determined according to the suggest information is not displayed at the label display location, the expected revenue of the corresponding label in the label pool may be estimated according to a historical hit rate of the label after the label is displayed as suggest information. For a specific method for calculating the historical hit rate of the suggest information, refer to any technology well known to those skilled in the art, for example, refer to a specific method for calculating a historical hit rate of a drop-down suggest word. Details are not described herein again.

For example, after a user inputs "automobile", suggest information returned by a search engine includes: "automobile" and "auto beauty". If a label determined by a recommendation application for the suggest information includes "auto beauty", "Auto Yibai", "Auto Studio", and "Auto Station", etc., assuming that "Auto Yibai" has not been recommended to a user as a label of the suggest information, a historical hit rate of suggest information "Auto Yibai" is determined according to historical data of the search engine, and then an expected revenue of the label "Auto Yibai" is determined according to the historical hit rate of the suggest information "Auto Yibai". For example, the historical hit rate of the suggest information "Auto Yibai" is used as the expected revenue of the label "Auto Yibai", or a product obtained by multiplying the historical hit rate of the suggest information "Auto Yibai" by a coefficient is used as the expected revenue of the label "Auto Yibai". In specific implementation, during estimation of the expected revenue revenue of the corresponding label in the label pool according to the historical hit rate of the suggest information same as the label. For example, t in the Formula 1 may be an expected revenue of the label "Auto Yibai" of the suggest information "auto beauty", that is, the historical hit rate of the "Auto Yibai" as suggest information. Other calculation methods may also be used according to a specific service requirement, and a specific calculation method is not limited in this application.

In a second method, an expected revenue of a corresponding label in the label pool is estimated based on a user feature of a current user and an estimated hit rate of the label.

Optionally, in order to further improve user experience, suitable labels are recommended to different users. In specific implementation, the expected revenue of the corresponding label in the label pool may be estimated based on the user feature of the current user and the estimated hit rate of the label. When the label is displayed, historical hit rate data of the label is updated in real time, and the expected revenue of the label is further calculated based on the updated historical hit rate data, so that accuracy of a calculation result is improved. In specific implementation, after a large amount of behavior data indicating whether a user hits the label is collected, a user hit probability model may be trained using a logistic regression (LR) algorithm, to calculate a more accurate current expected revenue of the user. For a specific method for training the hit probability model, refer to any technology known to those skilled in the art, and details are not described herein again.

Then the expected revenue of the label may be estimated according to the following Formula 2:

$$X_j(t) = \phi_U^T W \quad \text{Formula 2}$$

$\phi$ is a feature vector composed of a feature of a user u and an estimated hit rate feature of a label j of suggest information X. The user feature includes but is not limited to one or more of a geographical location of user search, a search time, a user's preference on a category of a label, a user's preference on a recommended merchant, etc. The estimated hit rate feature may be a number of historical hit times of the label j or a hit rate estimated based on user behavior data. W is a parameter vector of the logistic regression LR algorithm, and corresponds to the feature vector of the user. W is specifically a weight of each dimensional feature in the feature vector $\phi$. T is a transposed matrix corresponding to $\phi$ and W.

In specific implementation, a model of the vector W may be trained using an open source LR algorithm package according to data about historical hit performed the user u on the label, that is, behavior data indicating whether the label j is hit. Then, the expected revenue of the user is estimated based on the feature vector $\phi$ of the user u, to recommend a targeted label to the user, and a variety of recommendation labels are provided as a hit behavior varies. For a specific method for extracting the feature vector $\phi$ of the user, refer to any technology known to those skilled in the art, and details are not described herein again.

In this embodiment of this application, the feature vector of the user includes at least a hit rate feature. A revenue adjustment indicator (bonus) of each label is used to balance a label display probability according to a service requirement. In specific implementation, a revenue adjustment indicator of each label in the label pool is respectively determined according to a historical total number of times a label of the suggest information is displayed and a total number of times each label in the label pool is displayed. In an embodiment of this application, the revenue adjustment indicator (bonus) may be calculated using the following Formula 3:

$$\text{bonus} = \sqrt{\frac{2\ln(t)}{T_{j,t}}} \quad \text{Formula 3}$$

In the formula, t is a historical total number of times a label is displayed for the suggest information X, and $T_{j,t}$ is a number of times the label j is displayed during displaying of the label of the suggest information X.

It can be learned from the formula 3 that, for a label displayed fewer times, a display opportunity is provided, and a recommendation value is appropriately increased. For a label displayed more times, a recommendation value is appropriately reduced to allocate some display opportunities to the label displayed fewer times. In specific implementation, the revenue adjustment indicator may also be calculated using other inverse proportional function of t and $T_{j,t}$, which are not enumerated herein.

Then, the sum of the expected revenue and the revenue adjustment indicator is used as the recommendation value of each label in the label pool, that is, recommendation value=revenue + bonus. During determining of a display score of the label, the expected revenue value of the label occupies a larger weight, and the revenue adjustment indicator (bonus) of the label merely plays a fine-tuning role. Therefore, in specific implementation, contributions of the expected revenue and the revenue adjustment indicator in calculation of the recommendation value may be balanced through setting of a weighting coefficient of a weighted sum or adjustment of the formula for calculating the revenue adjustment indicator.

Finally, the preset number of labels with a highest recommendation value are selected from the label pool and recommended to the user. For example, the preset number is two. It is assumed that a label determined for the suggest information "auto beauty" includes: "Auto Yibai", "Auto Studio", and "Auto Station", etc. After calculation, the labels "Auto Yibai" and "Auto Studio" with the highest recommendation value are recommended to the user.

According to the recommendation information obtaining method disclosed in this embodiment of this application, the label knowledge map is established in advance, and the to-be-displayed suggest information is obtained, and then the label pool is constructed based on the suggest information and the preset label knowledge map, and then the preset number of labels are selected from the label pool and recommended to the user, so that information to be recommended to the user is enriched. Moreover, the label in the obtained label pool is selected according to a preset method, so that a label to be recommended to the user changes in real time, and the to-be-recommended information is more novel.

Further, the preset number of labels are selected from the label pool using the upper confidence bound algorithm to be recommend to the user, to ensure that all types of labels are fully displayed, thereby effectively preventing the Matthew effect, and to ensure that an optimal label combination is presented, and maximize label usage and a hit rate of a search list page as much as possible.

Embodiment 3

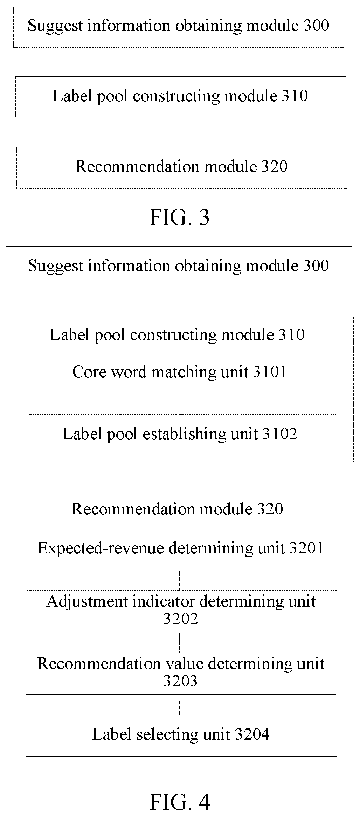

As shown in FIG. 3, a recommendation information obtaining apparatus disclosed in this embodiment includes:

a suggest information obtaining module 300 configured to obtain to-be-displayed suggest information;
a label pool constructing module 310 configured to construct a label pool based on the suggest information and a preset label knowledge map; and
a recommendation module 320 configured to select a preset number of labels from the label pool constructed by the recommendation module 310 and recommend the preset number of labels to a user.

The label knowledge map is one in which the suggest information is a core word and corresponding dimensional information of the suggest information is described using a label.

Optionally, the recommendation module 320 is further configured to:
select the preset number of labels from the label pool using an upper confidence bound algorithm.

Optionally, as shown in FIG. 4, the recommendation module 320 further includes:

an expected-revenue determining unit 3201 configured to estimate an expected revenue of each label in the label pool according to data about a historical behavior performed by the user on the label;
an adjustment indicator determining unit 3202 configured to respectively determine a revenue adjustment indicator of each label in the label pool according to a historical total number of times a label of the suggest information is displayed and a total number of times each label in the label pool is displayed;
a recommendation value determining unit 3203 configured to use a sum of the expected revenue and the revenue adjustment indicator as a recommendation value of each label in the label pool; and
a label selecting unit 3204 configured to select, from the label pool, the preset number of labels with a highest recommendation value and recommend the preset number of labels to the user.

Optionally, the expected-revenue determining unit 3201 includes either or both of the following:

a first expected-revenue determining sub-unit (not shown in the figure) configured to estimate an expected revenue of a corresponding label in the label pool based on a historical hit rate of suggest information same as the label; and
a second expected-revenue determining sub-unit (not shown in the figure) configured to estimate an expected revenue of a corresponding label in the label pool is estimated based on a user feature of a current user and an estimated hit rate of the label.

Optionally, as shown in FIG. 4, the label pool constructing module 310 includes:

a core word matching unit 3101 configured to match the suggest information with each core word in the preset label knowledge map; and
a label pool establishing unit 3102 configured to add all labels in the label knowledge map corresponding to matched core words to the label pool.

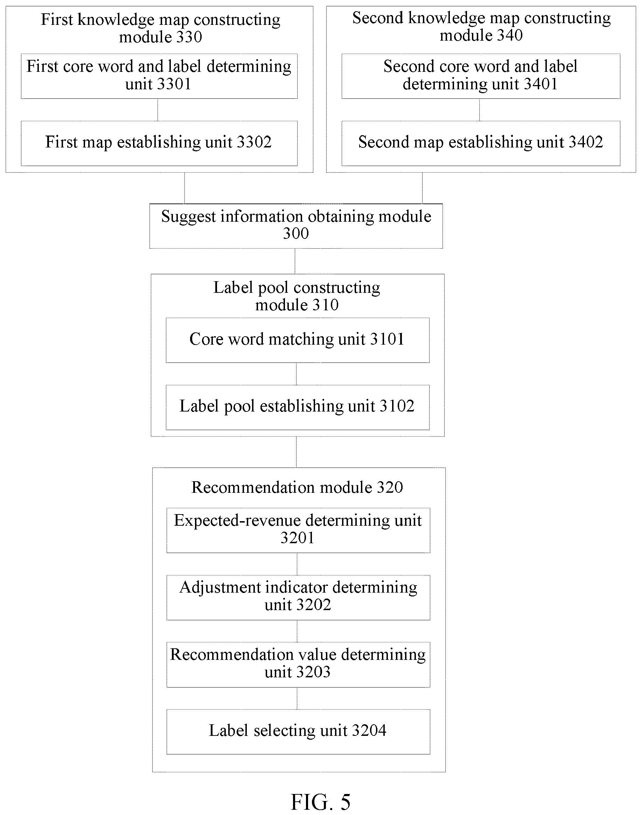

Optionally, as shown in FIG. 5, apparatus further includes a first knowledge map constructing module 330 and/or a second knowledge map constructing module 340.
The first knowledge map constructing module 330 is configured to construct the label knowledge map based on structured point of interest data.
Optionally, as shown in FIG. 5, the first knowledge map constructing module 330 includes:

a first core word and label determining unit 3301 configured to determine a core word and a label of the core word based on a point of interest name, a category name, and an additional attribute name in the structured point of interest data; and
a first map establishing unit 3302 configured to establish a tree-like relationship among labels according to a hierarchical relationship among category systems in the structured point of interest data, a hierarchical relationship among additional attribute systems, and a correspondence between the category system and the additional attribute system, where a root node of each of the tree-like relationships is a core word of the cluster label knowledge map, and a leaf node is a label of a corresponding hierarchy.

The second knowledge map constructing module 340 is configured to construct the label knowledge map based on a user behavior log.
Optionally, as shown in FIG. 5, the second knowledge map constructing module 340 includes:

a second core word and label determining unit 3401 configured to determine a core word and a label of the core word based on a mined frequent item set of the user behavior log; and
a second map establishing unit 3402 configured to establish a tree-like relationship among corresponding labels according to a preset association relationship between frequent items.

A root node of the tree-like relationship is a core word of the cluster label knowledge map, and a leaf node is a label. The preset association relationship includes an association relationship between a commodity and a merchant and an association relationship between a merchant and a business circle.
According to the recommendation information obtaining apparatus disclosed in the embodiment of this application, the label knowledge map is established in advance, and the to-be-displayed suggest information is obtained, and then the label pool is constructed based on the suggest information and the preset label knowledge map, and then the preset number of labels are selected from the label pool and recommended to the user, so that information to be recommended to the user is enriched. Moreover, the label in the obtained label pool is selected according to a preset method, so that a label to be recommended to the user changes in real time, and the to-be-recommended information is more novel.
Further, the preset number of labels are selected from the label pool using the upper confidence bound algorithm to be recommend to the user, to ensure that all types of labels are fully displayed, thereby preventing the Matthew effect, and to ensure that an optimal label combination is presented, and maximize label usage and a hit rate of a search list page as much as possible.
Correspondingly, this application also discloses an electronic device, including a memory, a processor, and a computer program stored in the memory and executable on the processor. Execution of the computer program by the processor implements the recommendation information obtaining methods according to Embodiment 1 and Embodiment 2 of this application. The electronic device may be a personal computer (PC), a mobile terminal, a personal digital assistant, a tablet computer, or the like.
This application further discloses a computer-readable storage medium, storing a computer program. The program, when executed by a processor, implements the steps of the recommendation information obtaining methods according to Embodiment 1 and Embodiment 2 of this application.
The embodiments in this specification are all described in a progressive manner. Descriptions of each embodiment focus on differences from other embodiments, and same or similar parts among respective embodiments may be mutually referenced. The apparatus embodiments are substantially similar to the method embodiments and therefore are only briefly described, and reference may be made to the method embodiments for the corresponding sections.
The recommendation information obtaining method and apparatus provided by this application are described in detail in the foregoing, and the text applies specific examples to describe the principle and implementations of this application. The foregoing descriptions of the embodiments are only intended to help understand the method and core idea of this application. Meanwhile, to a person of ordinary skill in the art, changes can be made on the specific implementations and application range according to the idea of this application. In conclusion, the content of the specification should not be construed as a limit to this application.

Through the description of the foregoing implementations, a person skilled in the art may clearly understand that the implementations may be implemented by software in addition to a necessary universal hardware platform, or by hardware, or by hardware. Based on such an understanding, the foregoing technical solutions essentially or the part contributing to the prior art may be implemented in a form of a software product. The computer software product may be stored in a computer readable storage medium, such as a ROM/RAM, a hard disk, or an optical disc, and includes several instructions for instructing a computer device (which may be a personal computer, a server, a network device, or the like) to perform the methods described in the embodiments or some parts of the embodiments.

**Claims**

1. A recommendation information obtaining method, comprising:

   obtaining to-be-displayed suggest information;
   constructing a label pool based on the suggest information and a preset label knowledge map in which multi-dimensional information of a core word is described based on the core word using a label; and
   selecting a preset number of labels from the label pool and recommending the preset number of labels to a user.

2. The method according to claim 1, wherein the selecting a preset number of labels from the label pool and recommending the preset number of labels to a user comprises:
   selecting the preset number of labels from the label pool using an upper confidence bound algorithm.

3. The method according to claim 2, wherein the selecting the preset number of labels from the label pool using an upper confidence bound algorithm comprises:

   estimating an expected revenue of each label in the label pool according to data about a historical behavior performed by the user on each label in the label pool;
   determining a revenue adjustment indicator of each label in the label pool according to a historical total number of times a label of the suggest information is displayed and a total number of times each label in the label pool is displayed;
   using a sum of the expected revenue and the revenue adjustment indicator as a recommendation value of each label in the label pool; and
   selecting, from the label pool, the preset number of labels with a highest recommendation value and recommending the preset number of labels to the user.

4. The method according to claim 3, wherein the data about the historical behavior performed by the user on the label comprises any one or more of the following:

   a historical hit rate of suggest information same as the label;
   a user feature of a current user; and
   an estimated hit rate of the label.

5. The method according to claim 1, wherein the constructing a label pool based on the suggest information and a label knowledge map comprises:

   matching the suggest information with each core word in the label knowledge map; and
   adding all labels corresponding to matched core words to the label pool.

6. The method according to any of claims 1 to 5, further comprising either or both of the following:

   constructing the label knowledge map based on structured point of interest data; and
   constructing the label knowledge map based on a user behavior log.

7. The method according to claim 6, wherein the constructing the label knowledge map based on structured point of interest data comprises:

   determining a core word and a label of the core word based on a point of interest name, a category name, and an additional attribute name in the structured point of interest data;
   establishing a tree-like relationship among labels according to a hierarchical relationship among category systems in the structured point of interest data, a hierarchical relationship among additional attribute systems, and a correspondence between the category system and the additional attribute system, wherein
   a root node of each of the tree-like relationships is a core word of the cluster label knowledge map, and a leaf node is a label of a corresponding hierarchy.

8. The method according to claim 6, wherein the constructing the label knowledge map based on a user behavior log comprises:

   determining a core word and a label of the core word based on a mined frequent item set of the user behavior log; and

establishing a tree-like relationship among labels according to a preset association relationship between frequent items, wherein the preset association relationship comprises an association relationship between a commodity and a merchant and an association relationship between a merchant and a business circle; a root node of the tree-like relationship being a core word of the cluster label knowledge map, and a leaf node being a label.

9. A recommendation information obtaining apparatus, comprising:

a suggest information obtaining module configured to obtain to-be-displayed suggest information;
a label pool constructing module configured to construct a label pool based on the suggest information and a preset label knowledge map in which multi-dimensional information of a core word is described based on the core word using a label; and
a recommendation module configured to select a preset number of labels from the label pool and recommend the preset number of labels to a user.

10. The apparatus according to claim 9, wherein the recommendation module is further configured to:
select the preset number of labels from the label pool using an upper confidence bound algorithm.

11. The apparatus according to claim 10, wherein the recommendation module further comprises:

an expected-revenue determining unit configured to estimate an expected revenue of each label in the label pool according to data about a historical behavior performed by the user on each label in the label pool;
an adjustment indicator determining unit configured to determine a revenue adjustment indicator of each label in the label pool according to historical total number of times a label of the suggest information is displayed and a total number of times each label in the label pool is displayed;
a recommendation value determining unit configured to use a sum of the expected revenue and the revenue adjustment indicator as a recommendation value of each label in the label pool; and
a label selecting unit configured to select, from the label pool, the preset number of labels with a highest recommendation value and recommend the preset number of labels to the user.

12. The apparatus according to claim 11, wherein the data about the historical behavior performed by the user on the label comprises any one or more of the following:

a historical hit rate of suggest information same as the label;
a user feature of a current user; and
an estimated hit rate of the label.

13. The apparatus according to claim 9, wherein the label pool constructing module comprises:

a core word matching unit configured to match the suggest information with each core word in the label knowledge map; and
a label pool establishing unit configured to add all labels corresponding to matched core words to the label pool.

14. The apparatus according to any of claims 9 to 13, further comprising either or both of the following:

a first knowledge map constructing module configured to construct the label knowledge map based on structured point of interest data; and
a second knowledge map constructing module configured to construct the label knowledge map based on a user behavior log.

15. The apparatus according to claim 14, wherein the first knowledge map constructing module comprises:

a first core word and label determining unit configured to determine a core word and a label of the core word based on a point of interest name, a category name, and an additional attribute name in the structured point of interest data; and
a first map establishing unit configured to establish a tree-like relationship among labels according to a hierarchical relationship among category systems in the structured point of interest data, a hierarchical relationship among additional attribute systems, and a correspondence between the category system and the additional attribute system, wherein
a root node of each of the tree-like relationships is a core word of the cluster label knowledge map, and a leaf node is a label of a corresponding hierarchy.

16. The apparatus according to claim 14, wherein the second knowledge map constructing module comprises:

a second core word and label determining unit configured to determine a core word and a label of the core word based on a mined frequent item set of the user behavior log; and
a second map establishing unit configured to establish a tree-like relationship among corresponding labels according to a preset association relationship between frequent items, wherein the preset association relationship comprises an association relationship between a commodity and a merchant and an association relationship between a merchant and a business circle; a root node of the tree-like relationship being a core word of the cluster label knowledge map, and a leaf node being a label.

17. An electronic device, comprising a memory, a processor, and a computer program stored on the memory and executable on the processor, wherein when the processor executes the computer program, the recommendation information obtaining method according to any of claims 1 to 8 is implemented.

18. A computer readable storage medium storing a computer program, wherein when executed by a processor, the computer program implements the steps of the recommendation information obtaining method according to any of claims 1 to 8.

Obtain to-be-displayed suggest information

100

Construct a label poolbased on the suggest information and a preset label knowledge map

110

Select a preset number of labelsfrom the label pool and recommendthe preset number of labelsto a user

120

FIG. 1

Construct a label knowledge map

200

Obtain to-be-displayed suggest information

210

Construct a label poolbased on the suggest information and the preset label knowledge map

220

Select a preset number of labelsfrom the label pool and recommend the preset number of labelsto a user

230

FIG. 2

| Suggest information obtaining module 300 |
| Label pool constructing module 310 |
| Recommendation module 320 |

FIG. 3

| Suggest information obtaining module 300 |

Label pool constructing module 310
| Core word matching unit 3101 |
| Label pool establishing unit 3102 |

Recommendation module 320
| Expected-revenue determining unit 3201 |
| Adjustment indicator determining unit 3202 |
| Recommendation value determining unit 3203 |
| Label selecting unit 3204 |

FIG. 4

First knowledge map constructing
module 330

First core word and label determining
unit 3301

First map establishing unit 3302

Second knowledge map constructing
module 340

Second core word and label
determining unit 3401

Second map establishing unit 3402

Suggest information obtaining module
300

Label pool constructing
module 310

Core word matching unit 3101

Label pool establishing unit 3102

Recommendation module 320

Expected-revenue determining unit
3201

Adjustment indicator determining
unit 3202

Recommendation value determining
unit 3203

Label selecting unit 3204

FIG. 5

# INTERNATIONAL SEARCH REPORT

| | International application No. |
|---|---|
| | PCT/CN2017/120045 |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F 17/-

Documentation searched other than minimum documentation to the extent that such documents are included in the fields searched

Electronic data base consulted during the international search (name of data base and, where practicable, search terms used)

CNABS; CNTXT; VEN; DWPI; WOTXT; EPTXT; USTXT; CNKI: 搜索, 检索, 查询, 推荐, 推送, 知识图谱, 标签, 属性, 权重, 调整, 历史, 日志, 次数, search+, query, suggest+, recommend+, mapping knowledge domain, tag, attribute, weight, adjust+, history, log, times, count.

## C. DOCUMENTS CONSIDERED TO BE RELEVANT

| Category* | Citation of document, with indication, where appropriate, of the relevant passages | Relevant to claim No. |
|---|---|---|
| X | CN 104794232 A (BAIDU ONLINE NETWORK TECHNOLOGY BEIJING CO., LTD.) 22 July 2015 (22.07.2015), description, paragraphs [0021]-[0037], and figure 1 | 1, 2, 5-10, 13-18 |
| Y | CN 104794232 A (BAIDU ONLINE NETWORK TECHNOLOGY BEIJING CO., LTD.) 22 July 2015 (22.07.2015), description, paragraphs [0021]-[0037], and figure 1 | 3, 4, 11, 12 |
| Y | CN 104077327 A (ALIBABA GROUP HOLDING LTD.) 01 October 2014 (01.10.2014), description, paragraphs [0029]-[0064], and figure 1 | 3, 4, 11, 12 |
| A | US 2016350321 A1 (BLOOMREACH INC.) 01 December 2016 (01.12.2016), entire document | 1-18 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 March 2018 | 09 April 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHENG, Shuling Telephone No. (86-10) 28950720 |
|---|---|

Form PCT/ISA/210 (second sheet) (July 2009)

## INTERNATIONAL SEARCH REPORT
### Information on patent family members

International application No.

PCT/CN2017/120045

| Patent Documents referred in the Report | Publication Date | Patent Family | Publication Date |
|---|---|---|---|
| CN 104794232 A | 22 July 2015 | None | |
| CN 104077327 A | 01 October 2014 | CN 104077327 B | 19 January 2018 |
| US 2016350321 A1 | 01 December 2016 | US 9384244 B1 | 05 July 2016 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710618792